# EUROPÄISCHE PATENTSCHRIFT

(11) **EP 2 439 507 B1**
(45) Veröffentlichungstag und Bekanntmachung des Hinweises auf die Patenterteilung: **05.06.2013**
(21) Anmeldenummer: 11180046.2
(22) Anmeldetag: 05.09.2011
(51) Int. Cl.: G01M 5/00, G01N 3/20

(54) **Verfahren und Vorrichtung zum Prüfen der Stabilität eines Seil-Systems**
Method and device for testing the stability of a cable system
Procédé et dispositif de contrôle de la stabilité d'un système de corde

(30) Priorität: 05.10.2010 DE 102010047362
(43) Veröffentlichungstag der Anmeldung: 11.04.2012
(73) Patentinhaber: Reiners, Christa, 41812 Erkelenz (DE)
(72) Erfinder: Reiners, Christa, 41812 Erkelenz (DE)
(74) Vertreter: Frese Patent

(56) Entgegenhaltungen:
- AT-A4- 505 036
- DE-A1- 10 312 052
- KR-A- 20080 038 565

## Beschreibung

Die Erfindung betrifft ein Verfahren zum Prüfen der Stabilität eines Seils- Systems, wobei das Seil eine Fläche zwischen zwei ortsfesten Widerlagern frei überspannt und mit Hilfe von Aufnahmen gehalten ist, die im oder am jeweiligen Widerlager fixiert sind, wobei eine Prüflast ausgeübt wird.

Die Erfindung betrifft weiterhin eine entsprechende Vorrichtung.

Solche Verfahren werden zum Prüfen der Standsicherheit eines Seil- Systems eingesetzt, das zwischen ortsfesten Widerlagern wie Hauswänden, Mauern oder Masten eine Fläche, z. B. eine Strasse oder ein Tal, überspannt. Das Seil ist in oder an den Widerlagern mittels einer Verankerung gehalten, die Aufnahmen wie z.B. Haken oder Ösen umfasst. Die Aufnahmen sind im oder am jeweiligen Widerlager z.B. mittels Dübeln fixiert. Zum Prüfen wird das Seil belastet. Im allgemeinen soll die Prüflast die normale Zugkraft des Seils übersteigen.

Als normale Zugkraft ist diejenige Kraft definiert, die unter normalen Bedingungen durch das Gewicht von Seil und daran hängendem Gegenstand auf die Aufnahmen ausgeübt wird.

Seile der beschriebenen Art werden dazu benutzt, Gegenstände, wie Lampen, Ampeln, Schilder oder Oberleitungen in angemessener Höhe über der jeweiligen Fläche zu positionieren. Dies wird auch als (mechanische) Seil-Überspannung der Fläche bezeichnet. Die Seile werden im Allgemeinen zwischen Masten, Hauswänden und/oder Felswänden gespannt.

Sowohl die Seile als auch die Aufnahmen und deren Verbindung mit dem Widerlager bzw. mit dem jeweils aufgehängten Gegenstand unterliegen einer Alterung. Aus diesem Grund müssen die Stabilität des Seils, der Aufnahmen, deren Verankerung am Widerlager und der Verbindungen-also die Stabilität des ganzen Seil- Systems-in gewissen Zeitabständen geprüft werden. Besonders schwierig ist dabei die Prüfung der Verankerung der Aufnahme in einer Wand, z. B. Haus- oder Felswand, wenn der Zustand des Teils der jeweiligen Verankerung bzw. des Ankers, der in der Wand steckt, nicht durch Augenschein untersucht werden kann.

Die Aufnahme muss so stabil ausgebildet und verankert sein, dass sie nicht nur dem Gewicht des Seils und des daran hängenden Gegenstands, sondern auch zusätzlichen Belastungen standhält, die durch Wind und Wetter, insbesondere auch Eis- und Schneelasten, verursacht werden können. Die zusätzlichen Belastungen können die normale Last erheblich übersteigen. Bei herkömmlichen Prüfungen werden daher die normale Zugkraft des Seils deutlich übersteigende Prüflasten auf das Seil und die Aufnahmen ausgeübt. Die Prüflast beträgt z.B. bisher das circa Fünffache der normalen Last. Wenn die normale Zugkraft, z. B. die Last eines eine Straßenleuchte tragenden Seils, 60 kg beträgt, wird nach den bekannten Verfahren mit einer Prüfkraft von ca. 300 kg untersucht.

Hierfür wird nach dem Bekannten z.B. ein entsprechendes Gewicht an das Seil gehängt. Bei einer derartigen Belastung ist jedoch nicht auszuschließen, dass durch die Untersuchung selbst Schäden an der Aufnahme bzw. an deren Verankerung oder am Seil verursacht werden.

Die KR 2008 0038565 A beschreibt eine Laboranlage zur reproduzierbaren Bestimmung einer Seilspannung. Die Prüfung eines Seilsystems ist nicht offenbart.

Der Erfindung liegt die Aufgabe zugrunde, ein Verfahren zum Prüfen eines Seils und dessen Verankerung - insgesamt als Seil- System bezeichnet - zu schaffen, das es bei relativ geringer Prüflast und ohne Gefährdung des Seil- Systems ermöglicht, Aussagen über dessen Stabilität, insbesondere von Seil, Aufnahme und Verankerung, zu machen. Das Verfahren soll Hinweise auf den Ort eines eventuellen Defekts liefern können, wenn ein solcher Defekt vorhanden ist, und zugleich in der Lage sein, eine im Rahmen des Untersuchungsziels fehlerfreie Seilaufhängung als solche zu identifizieren.

Eine zweite Aufgabe besteht in der Schaffung einer Vorrichtung zu Durchführung des Verfahrens.

Die erste Aufgabe ist durch die Merkmale des Anspruchs 1 gelöst. Die Prüflast wird kontrolliert gesteigert. Hierbei können eventuell vorhandene Instabilitäten des Seils, der Aufnahmen und/oder der Verankerung frühzeitig festgestellt werden, so dass ein totales Versagen des Seil- Systems mit entsprechender Gefährdung von Personen und Sachen während der Prüfung sicher vermieden wird.

Die Stabilität beider Aufnahmen wird gleichzeitig geprüft. Hierdurch wird der Arbeitsaufwand für die Prüfung erheblich reduziert und diese entsprechend beschleunigt.

An jeder Aufnahme wird mindestens ein Kriterium zur Bestimmung der Stabilität gemessen. Das bedeutet, jeder Aufnahme ist ein entsprechender Sensor zugeordnet. Bei dem Verfahren sollen in erster Linie die Positionen der Seilaufnahme relativ zum jeweiligen Widerlager erfasst werden, z. B. zu einer Haus- oder Felswand. Mit Hilfe des jeweiligen Sensors wird eine Bewegung der Aufnahme kontinuierlich registriert und mittels eines Computers ausgewertet. Dies erlaubt die sichere Feststellung der Sicherheit des Seil- Systems oder von Schwachpunkten.

Der Erfindung liegt die Erkenntnis zugrunde, dass ein Bruch des Seils und/oder der Aufnahmen bzw. ein Lösen der Verankerung der Aufnahme in der Praxis nie ohne eine ungewöhnliche-möglicherweise geringfügige-Dehnung und/oder Lockerung auftritt. Diese geringfügigen Dehnungs- und Lockerungsbewegungen oder andere Bruchvorboten sind durch das erfindungsgemäße Verfahren bei bereits relativ geringen Prüflasten messbar. Die erforderlichen Prüflasten können so gering gehalten werden, dass sie nicht zu einer Schädigung des intakten Seil- Systems führen.

Durch die Erfindung wird es möglich, kleinste Bewegungen der Aufnahme in der Größenordnung von weniger als zehntel Millimetern in irgendeiner Richtung relativ zum Widerlager zu erfassen. Bei Reihenmessungen zur Erprobung der Erfindung hat sich gezeigt, dass bereits geringe Prüflasten ausreichen, um eine mögliche Instabilität des Seil- Systems festzustellen, wenn die Position der Aufnahme relativ zum zugehörigen Widerlager genau genug bestimmt und mit einer Basismessung verglichen wird.

Die Unteransprüche betreffen die vorteilhafte Ausgestaltung der Erfindung.

In einer ersten Ausgestaltung wird die Prüflast in eine der Aufnahmen und in das Seil eingeleitet. Hierbei ist die Befestigung der Mittel zum Aufbringen der Prüflast relativ einfach: An der Aufnahme wird ein erstes Ende der Mittel in eine vorhandene Öse oder einen Haken eingehakt. Zum Befestigen eines zweiten Endes der Mittel an dem Seil wird eine geeignete Seilklemme verwendet, die eine Beschädigung des Seils ausschließt.

Alternativ dazu wird die Prüflast ausschließlich in das Seil eingeleitet. Hierfür werden die Enden der Mittel zum Aufbringen der Prüflast mit Klemmen an dem Seil befestigt. Dies hat den Vorteil, dass auch zum Seil gehörende Teile wie z.B. Spannvorrichtungen, Klemmen, Kauschen und Augen, die meistens in einem Endbereich des Seils angeordnet sind, nicht durch die Mittel zum Aufbringen der Prüflast überbrückt und daher ebenfalls der Prüfung unterzogen werden.

In einer weiteren Ausgestaltung werden Bewegungen der Aufnahmen dreidimensional ausgewertet. Die dritte Dimension wird hier durch Auswertung der Veränderungen eines Durchmessers eines Lichtstrahls bestimmt. Hierdurch ist eine besonders präzise Bestimmung der Standsicherheit ermöglicht, weil mit der Messung alle möglichen Bewegungen festgestellt werden können.

In einer weiteren Ausgestaltung werden Bewegungen der Aufnahmenmittels Beschleunigungssensoren ermittelt. Diese haben den Vorteil, dass die Vorbereitungen für die Standsicherheitsprüfung sehr wenig Aufwand erfordern.

In einer weiteren Ausgestaltung werden Messwerte mittels eines Computers ausgewertet. Dies beschleunigt die Auswertung und ermöglicht eine sinnvolle Darstellung der Messergebnisse, so dass eine Beurteilung besonders sicher erfolgen kann.

In einer weiteren Ausgestaltung wird zunächst eine Prüflast aufgebracht, die einer normalen Zugkraft entspricht. Hierdurch wird die normale Belastung des Seil- Systems bestimmt. Aus dieser kann in Zusammenhang mit der maximal möglichen Prüflast festgestellt werden, ob das Seil- System eine weitere Last tragen kann und wie groß diese gegebenenfalls sein darf. Weitere Lasten können z.B. Zusatzleuchten für besondere Anlässe, Fahnen, Schmuck und/oder Werbeträger sein.

Die Zweite Aufgabe ist durch die Merkmale des Anspruchs 8 gelöst. Es gilt das für das Verfahren Gesagte entsprechend.

Die Erfindung wird anhand der schematischen Zeichnung weiter erläutert. Es zeigen
Figur 1 eine Ansicht, teilweise geschnitten, eines Seil- Systems mit Leuchte und mit Mitteln zur Bestimmung der Stabilität,
Figur 2 eine vergrößerte Darstellung eines Abschnitts des Seils mit Mitteln zum Aufbringen einer Prüflast und
Figur 3 Darstellungen von Messergebnissen.

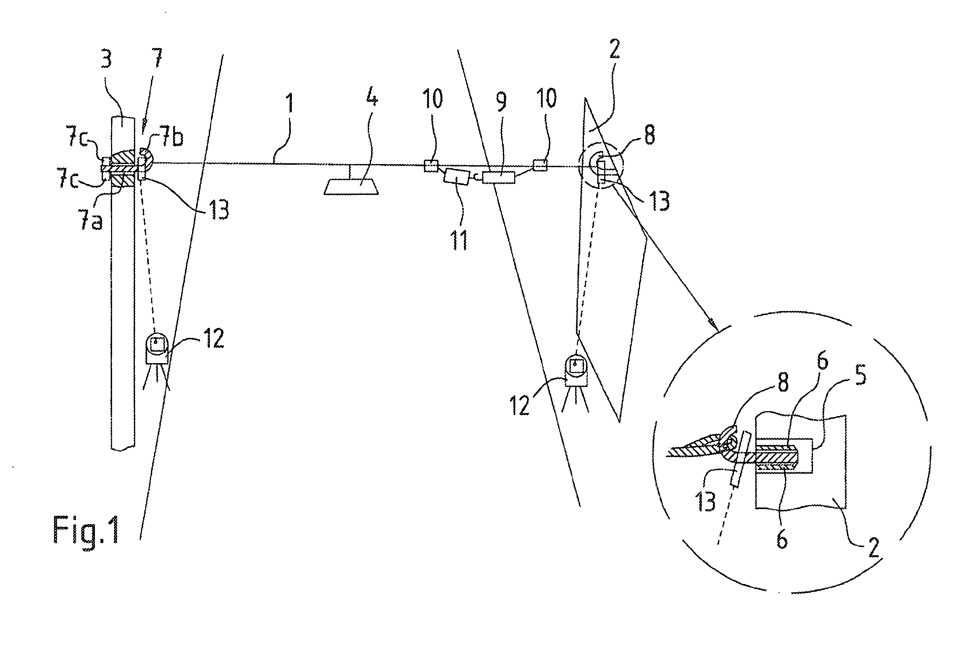

Wie aus der Figur 1 ersichtlich wird eine Straße auf einer Seite von einem Haus 2 begrenzt; auf der gegenüber liegenden Straßenseite ist ein Mast 3 angeordnet. Zwischen dem Haus 2 und dem Mast 3 ist ein Seil 1 mit daran hängender Leuchte 4 gespannt. Zum Befestigen des Seils 1 sind sowohl an dem Mast 3 als auch an dem Haus 2 Aufnahmen 7, 8, nämlich Masthaken 7 und Wandhaken 8, befestigt. Der Masthaken 7 weist einen eine Bohrung des Mastes 3 durchdringenden Bolzen 7a auf, der an einem dem eigentlichen Haken 7b gegenüberliegenden Ende mit einer Sicherung 7c fixiert ist. Der Mauerhaken 8 ist an dem Haus 2 in einer Bohrung 5 mit einem darin eingebrachten Dübel 6 fixiert.

Die Aufnahmen 7, 8 können alternativ ausgebildet sein: Sie können wie für den Masthaken 7 dargestellt als an dem gegenüberliegenden Ende mit einer Mutter gesicherter Haken 7b ausgebildet sein. Bei dem Haus 2 kann der Bolzen des Hakens auf der rückwärtigen Seite einer Wand mit einer Widerlagerplatte gesichert sein. In vielen Fällen ist die Aufnahme alternativ mittels des Dübels 6 in der Wand, z. B. auch in einer Felswand, oder dem Mast 3 fixiert. Die Aufnahmen 7, 8 können anstelle des Hakens eine geschlossene Öse aufweisen. Zwischen der Aufnahme 7, 8 und dem Seil 1 sind vielfach Spannvorrichtungen angeordnet, die hier als Teile des Seils 1 definiert sind.

Das Seil 1 besitzt an jedem seiner Enden ein Auge zum Einhängen an den Haken. Alternativ ist das Ende des Seils 1 durch die Öse der Aufnahme 7, 8 hindurchgezogen und anschließend mit dem freien Ende fixiert oder weitergeführt. Die Berührungsflächen zwischen dem Seil 1 und den Aufnahmen 7, 8 sind besonderem Verschleiß ausgesetzt, weil hier bei Bewegungen des Seils 1, z. B. infolge Windeinwirkung, Reibung auftritt. Durch die Reibung können nicht nur das Seil 1, sondern auch die Aufnahmen 7, 8 verschleißen.

Eine Vorrichtung zum Prüfen der Stabilität des Seils 1 und der Aufnahmen 7, 8 ist temporär angeordnet. Die Vorrichtung umfasst Mittel zum Aufbringen einer Prüflast und Mittel zur Bestimmung der Stabilität.

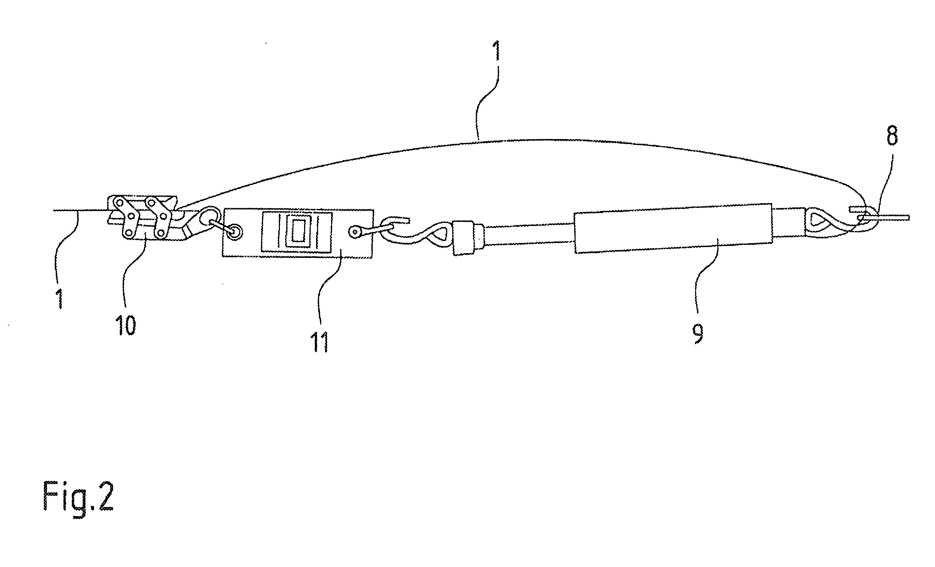

Die Mittel zum Aufbringen einer Prüflast, die aus der Figur 2 besonders deutlich erkennbar sind, umfassen einen Hydraulikzylinder 9, dessen erstes Ende in den Mauerhaken 8 eingehängt ist. Der Hydraulikzylinder 9 ist mittels einer Handpumpe so mit Druck beaufschlagbar, dass auf das Seil 1 und somit auch auf den Masthaken 7 sowie auf den Mauerhaken 8 eine Zugkraft wirkt. An einem zweiten Ende des Hydraulikzylinders 9 ist eine selbsthemmende Seilklemme 10 befestigt, die in einem dem Mauerhaken 8 zugeordneten Endbereich des Seils 1 lösbar angreift. Die an sich bekannte Seilklemme 10 ist bevorzugt eine Froschklemme oder eine Seilspannklemme und verstärkt mit zunehmender Zugkraft die Klemmkraft, während sie ohne Krafteinwirkung auf das Seil 1 anlegbar oder von diesem abnehmbar ist. Zwischen der Seilklemme 10 und dem zweiten Ende des Hydraulikzylinders 9 ist bevorzugt eine Kraftmesseinrichtung 11 mit integrierter Anzeige zur Bestimmung der Zugkraft angeordnet.

Die Mittel zur Bestimmung der Stabilität umfassen zwei Wegsensoren, denen eine Auswertevorrichtung in Form mindestens eines Computers zugeordnet ist. Jeder der Wegsensoren umfasst eine digitale Kamera 12 und eine Laserstrahlleuchte 13. Die Kamera 12 weist eine lichtempfindliche Aufnahmefläche in Form eines CCD- Sensors mit hoher Auflösung auf, die bei aufgestellter Kamera 12 nach oben weist. Die Laserstrahlleuchte 13 erzeugt im Betrieb einen punktförmigen Lichtstrahl, der auf die Aufnahmefläche gerichtet ist. Eine der Laserstrahlleuchten 13 ist an dem Masthaken 7 und die andere an dem Mauerhaken 8 lösbar befestigt; alternativ sind die Laserstrahlleuchten 13 in den Endbereichen des Seils 1 befestigt. Die Kameras 12 sind entsprechend unterhalb der Laserstrahlleuchten 13 positioniert. Zur Übermittlung von Bildern der Kameras 12 an den Computer sind Kabel oder Funkmittel angeordnet.

Zur Bestimmung der Stabilität des Seil- Systems wird jeweils eine der Laserstrahlleuchten 13 an dem Masthaken 7 und an dem Mauerhaken 8 lösbar befestigt. Die Kameras 12 werden auf Stativen so unter der zugehörigen Aufnahme 7, 8 positioniert, dass ein von der entsprechenden Laserstrahlleuchte 13 emittierter Laserstrahl in etwa senkrecht oder leicht schräg auf die zugehörige Aufnahmefläche trifft. Die erforderlichen Verkabelungen werden durchgeführt und der Computer mit einer speziellen Software hochgefahren. Die Laserstrahlleuchten 13 werden eingeschaltet und zu den Aufnahmeflächen ausgerichtet.

In eine der Aufnahmen 7, 8, hier in den Mauerhaken 8 wird das erste Ende des Hydraulikzylinders 9 eingehängt, der in einer ausgefahrenen Stellung ist. Das zweite Ende wird mittels der Seilklemme 10 so an dem Seil 1 befestigt, dass der Hydraulikzylinder 9 durch Betätigen der Handpumpe nur wenig eingefahren werden muss, bis Zugkräfte aufgebaut werden.

Alternativ wird auch des erste Ende des Hydraulikzylinders 9 mittels einer weiteren Seilklemme 10 an dem Seil 1 befestigt, wie in der Figur 1 gezeigt ist.

Zur Durchführung der eigentlichen Bestimmung der Stabilität wird der Hydraulikzylinder 9 durch Betätigen der Handpumpe kontrolliert und langsam mit Druck beaufschlagt, so dass Zugkraft auf den Mauerhaken 8 und das Seil 1 wirken, wobei der Teil des Seil- Systems zwischen der Seilklemme 10 und dem Mauerhaken 8 entlastet wird. Zunächst wird die Normallast bestimmt. Hierfür wird die Zugkraft so weit erhöht, bis der Teil des Seil- Systems zwischen der Seilklemme 10 und dem Mauerhaken 8 so eben vollkommen entlastet ist. Diese Zugkraft wird als Normallast registriert. Dann wird durch Betätigen der Handpumpe die Zugkraft weiter kontrolliert und langsam erhöht, bis ein vorbestimmter Faktor der Normallast erreicht ist. Dieser Faktor kann relativ gering sein und beträgt z.B. 1,5 bis 2,0. Diese geringe Erhöhung der Zugkraft reicht aus, um die Stabilität des Seil- Systems sicher beurteilen zu können.

Soll eine maximale Tragkraft des Seil- Systems bestimmt werden, wird die Zugkraft noch weiter z.B. bis zum Fünffachen der Normallast erhöht.

Während der gesamten Zeit der Bestimmung werden die Messdaten als Weg- Zeit- Diagramme registriert, gespeichert und auf einem Bildschirm angezeigt. Gleichzeitig werden das Seil- System und die Weg- Zeit- Diagramme sorgfältig auf ungewöhnliches Verhalten beobachtet-wie entstehende Beulen am Haus im Bereich des Mauerhakens, Verbiegen von Teilen, Reißen von Litzen des Seils 1 sowie lange Wege der Aufnahmen 7, 8 (mit den Laserstrahlleuchten 13) bei relativ geringer Kraftzunahme.

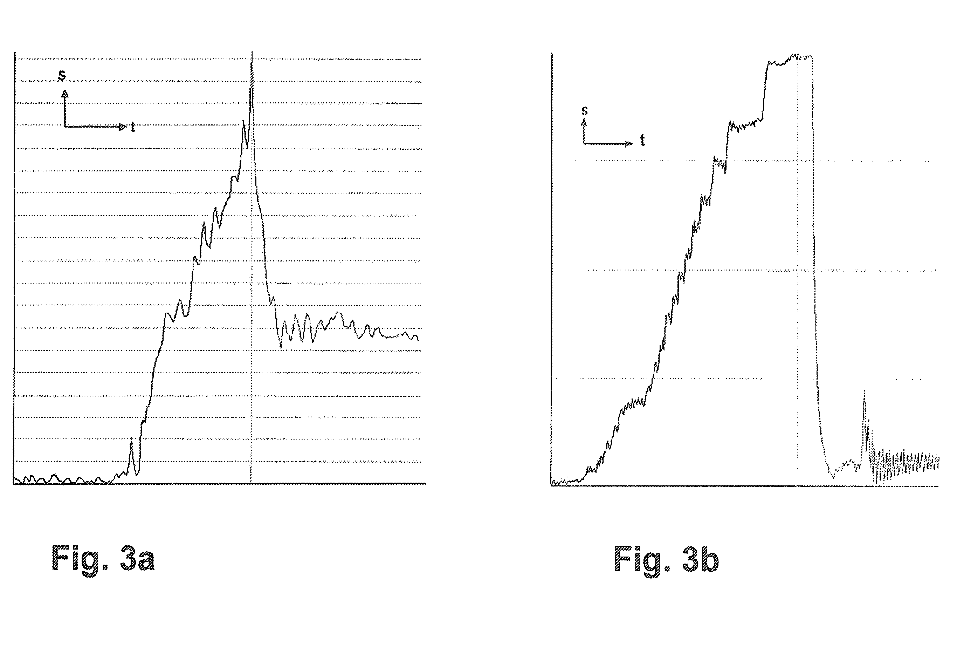

Sobald ungewöhnliches Verhalten festgestellt wird, wird die Prüfung abgebrochen, um einen Zusammenbruch des Seil- Systems zu verhindern. Dieses wird im Ergebnis als nicht sicher eingestuft und entsprechend markiert. Ein Weg- Zeit- Diagramm für ungewöhnliches Verhalten einer der Aufnahmen 7, 8 ist in der Figur 3a dargestellt: Mit Einleitung der Zugkraft durch den Hydraulikzylinder steigt der zurückgelegte Weg der Laserstrahlleuchte 13 und somit der Aufnahme 7, 8 stark auf einen maximalen Wert an. Sobald die Zugkraft zurückgenommen wird, geht die Laserstrahlleuchte 13 den Weg nur teilweise wieder zurück; der Weg erfolgte also nicht ausschließlich im elastischen Bereich und es bleibt eine dauerhafte "Verlängerung" durch z.B. Herauslösen oder Dehnung der Aufnahme 7, 8.

Wenn kein ungewöhnliches Verhalten festgestellt wurde, bleibt der zurückgelegte Weg im elastischen Bereich, wie aus der Figur 3b ersichtlich ist: nach dem Zurücklegen eines maximalen Wegs, der hier wesentlich geringer ist als nach der Figur 3a, geht die Laserstrahlleuchte 13 bei Zurücknahme der Zugkraft nahezu vollständig in die Ausgangslage zurück. Die Dehnung erfolgte also im elastischen Bereich. Das Seil- System wird als sicher eingestuft und entsprechend markiert.

Falls festgestellt werden soll, ob das Seil- System zusätzliche Lasten aufnehmen kann, wird bei der Prüfung eine entsprechend höhere Prüflast als Zuglast eingetragen. Die weitere Prüfung erfolgt wie oben beschrieben. Eine maximal erlaubte Zusatzlast wird angegeben.

Alternativ sind die Mittel zum Bestimmen der Stabilität mittels Beschleunigungssensoren gebildet.

### Bezugszeichenliste:

- 1: Seil
- 2: Haus
- 3: Mast
- 4: Leuchte
- 5: Bohrung
- 6: Dübel
- 7: Masthaken
- 8: Wandhaken
- 9: Hydraulikzylinder
- 10: Seilklemme
- 11: Kraftmesseinrichtung
- 12: Kamera
- 13: Laserstrahlleuchte

## Patentansprüche

1. Verfahren zum Prüfen der Stabilität eines Seil- Systems, wobei das Seil (1) eine Fläche zwischen zwei ortsfesten Widerlagern (2, 3) frei überspannt und mit Hilfe von Aufnahmen (7, 8) gehalten ist, die in oder an dem jeweiligen Widerlager (2, 3) fixiert sind, wobei eine Prüflast ausgeübt wird, **dadurch gekennzeichnet, dass** die Prüflast kontrolliert gesteigert wird, dass die Stabilität beider Aufnahmen (7, 8) gleichzeitig mittels jeweils mindestens eines Sensors geprüft wird und dass an jeder Aufnahme (7, 8) mindestens ein Kriterium zur Bestimmung der Stabilität gemessen wird.

2. Verfahren nach Anspruch 1, **dadurch gekennzeichnet, dass** die Prüflast in eine der Aufnahmen (7, 8) und in das Seil (1) eingeleitet wird.

3. Verfahren nach Anspruch 1, **dadurch gekennzeichnet, dass** die Prüflast in das Seil (1) eingeleitet wird.

4. Verfahren nach einem der Ansprüche 1 bis 3, **dadurch gekennzeichnet, dass** Bewegungen der Aufnahmen (7, 8) dreidimensional ausgewertet werden.

5. Verfahren nach einem der Ansprüche 1 bis 3, **dadurch gekennzeichnet, dass** Bewegungen der Aufnahmen (7, 8) mittels Beschleunigungssensoren bestimmt werden.

6. Verfahren nach einem der Ansprüche 1 bis 5, **dadurch gekennzeichnet, dass** Messwerte mittels eines Computers ausgewertet werden.

7. Verfahren nach einem der Ansprüche 1 bis 6, **dadurch gekennzeichnet, dass** zunächst eine Prüflast aufgebracht wird, die einer normalen Zugkraft entspricht.

8. Vorrichtung zum Prüfen der Stabilität eines Seil- Systems, wobei das Seil (1) eine Fläche zwischen zwei ortsfesten Widerlagern (2, 3) frei überspannt und mit Hilfe von Aufnahmen (7, 8) gehalten ist, die im oder am jeweiligen Widerlager (2, 3) fixiert sind, wobei Mittel zum Aufbringen einer Prüflast angeordnet sind, **dadurch gekennzeichnet, dass** die Mittel zum Aufbringen einer Prüflast einen Hydraulikzylinder (9) umfassen, mit dem eine kontrolliert veränderbare Kraft in das Seil (1) und/oder in eine der Aufnahmen (7, 8) einleitbar ist und dass jeder Aufnahme (7, 8) mindestens ein Mittel zur Bestimmung der Stabilität zugeordnet ist.

9. Vorrichtung nach Anspruch 8, **dadurch gekennzeichnet, dass** zum Einleiten der Kraft in das Seil (1) mindestens eine selbsthemmende Seilklemme (10) angeordnet ist.

10. Vorrichtung nach Anspruch 8 oder 9, **dadurch gekennzeichnet, dass** das Mittel zur Bestimmung der Stabilität eine Laserstrahlleuchte (13) und eine digitale Kamera (12) umfasst.

11. Vorrichtung nach Anspruch 8 oder 9, **dadurch gekennzeichnet, dass** das Mittel zur Bestimmung der Stabilität Beschleunigungssensoren umfasst.

12. Vorrichtung nach einem der Ansprüche 8 bis 11, **dadurch gekennzeichnet, dass** Mittel zum Bestimmen der Prüflast angeordnet sind.

13. Vorrichtung nach einem der Ansprüche 8 bis 12, **dadurch gekennzeichnet, dass** den Mitteln zum Bestimmen der Stabilität ein Computer zugeordnet ist.

## Claims

1. Method for testing the stability of a cable system, wherein the cable (1) freely spans an area between two fixed counter bearings (2, 3) and is held by means of retainers (7, 8), which are fixed in or on the respective counter bearing (2, 3), in which a test load is exerted, **characterised in that** the test load is increased in a controlled manner, **in that** the stability of both retainers (7, 8) is tested respectively at the same time by means of at least one sensor and **in that** for each retainer (7, 8) at least one criterion for determining the stability is measured.

2. Method according to claim 1, **characterised in that** the test load is introduced into one of the retainers (7, 8) and into the cable (1).

3. Method according to claim 1, **characterised in that** the test load is introduced into the cable (1).

4. Method according to one of claims 1 to 3, **characterised in that** movements of the retainers (7, 8) are evaluated in three dimensions.

5. Method according to one of claims 1 to 3, **characterised in that** movements of the retainers (7, 8) are determined by means of acceleration sensors.

6. Method according to one of claims 1 to 5, **characterised in that** measurements values are evaluated by means of a computer.

7. Method according to one of claims 1 to 6, **characterised in that** at first a test load is applied which corresponds to a normal tension force.

8. Device for testing the stability of a cable system wherein the cable (1) freely spans an area between two fixed counter bearings (2, 3) and is held by means of retainers (7, 8) which are fixed in or on the respective counter bearing (2, 3), in which means are provided for applying a test load, **characterised in that** the means for applying a test load comprises a hydraulic cylinder (9) by means of which a changeable force can be introduced into the cable (1) and/or into one of the retainers (7, 8) in a controlled manner and **in that** at least one means for determining the stability is assigned to each retainer (7, 8).

9. Device according to claim 8, **characterised in that** for introducing the force into the cable (1) at least one self-locking cable clamp (10) is provided.

10. Device according to claim 8 or 9, **characterised in that** the means for determining the stability comprises a laser beam light (13) and a digital camera (12).

11. Device according to claim 8 or 9, **characterised in that** the means for determining the stability comprises acceleration sensors.

12. Device according to one of claims 8 to 11, **characterised in that** means are provided for determining the test load.

13. Device according to one of claims 8 to 12, **characterised in that** a computer is assigned to the means for determining the stability.

## Revendications

1. Procédé pour tester la stabilité d'un système de câble, le câble (1) surplombant librement une étendue entre deux butées fixes (2, 3) et étant maintenu à l'aide d'éléments de réception (7, 8) qui sont fixés dans ou contre la butée respective (2, 3), dans lequelon met en oeuvre une charge d'essai, **caractérisé en ce qu'**on augmente de manière contrôlée la charge d'essai, **en ce qu'**on vérifie la stabilité des deux éléments de réception (7, 8) de manière simultanée au moyen de respectivement au moins un capteur et **en ce qu'**on mesure pourchaque élément de réception (7, 8) au moins un critère p o ur la détermination de la stabilité.

2. Procédé selon la revendication 1, **caractérisé en ce qu'**on fait passerla charge d'essai dans un des éléments de réception (7, 8) et dans le câble (1).

3. Procédé selon la revendication 1, **caractérisé en ce qu'**on fait passerla charge d'essaidansle câble (1).

4. Procédé selon l'une quelconque des revendications 1 à 3, **caractérisé en ce qu'**on évalue en trois dimensions les mouvements desélémentsde réception (7, 8).

5. Procédé selon l'une quelconque des revendications 1 à 3, **caractérisé en ce qu'**on détermine lesmouvementsdesélémentsde réception (7, 8) au moyen de capteurs de l'accélération.

6. Procédé selon l'une quelconque des revendications 1 à 5, **caractérisé en ce qu'**on évalue les valeurs de mesure au moyen d'un ordinateur.

7. Procédé selon l'une quelconque des revendications 1 à 6, **caractérisé en ce qu'**on applique d'abord une charge d'essai qui correspond à une force de tractionnormale.

8. Disp o sitif p o ur te ste r la stabilité d'un système de câble, le câble (1) surplombent librement une étendue entre deux butées fixes (2, 3) et étant maintenu à l'aide d'éléments de réception (7, 8) qui sont fixés dans ou contre la butée respective (2, 3), dans lequel on dispose des moyens pour l'application d'une charge d'essai, **caractérisé en ce que** les moyens pour l'application d'une charge d'essai comprennent un cylindre hydraulique (9) à l'aide duquel on peut faire passer une force que l'on peut modifier de manière contrôlée dansle câble (1) et/ou dans un des éléments de réception (7, 8) et **en ce qu'**au moins un moyen pour la détermination de la stabilité est attribué à chaque élémentde réception (7, 8).

9. Dispositif selon la revendication 8, **caractérisé en ce que**, pour faire passer la force dans le câble (1), on dispose au moins un pince-câble à blocage automatique (10).

10. Dispositif selon la revendication 8 ou 9, **caractérisé en ce que** le moyen pour déterminer la stabilité comprend une lampe à faisceau laser (13) et une caméra numérique (12).

11. Dispositif selon la revendication 8 ou 9, **caractérisé en ce que** le moyen pour déterminer la stabilité comprend des capteurs de l'accélération.

12. Dispositif selon l'une quelconque des revendications 8 à 11, **caractérisé en ce qu'**on dispose des moyens pour la détermination de la charge d'essai.

13. Dispositif selon l'une quelconque des revendications 8 à 12, **caractérisé en ce qu'**un ordinateur est attribué aux moyens pour déterminer la stabilité.
